# EUROPEAN PATENT APPLICATION

(11) **EP 4 601 093 A1**
(43) Date of publication of application: **13.08.2025**
(21) Application number: 25153217.2
(22) Date of filing: 22.01.2025
(51) Int. Cl.: H01M 50/244, H01M 50/262

(54) **CCS BRACKET, CCS ASSEMBLY, AND BATTERY MODULE**

(30) Priority: 22.01.2024 CN 202410090025; 05.06.2024 WO PCT/CN2024/097531
(71) Applicant: Eve Energy Co., Ltd., Huizhou, Guangdong 516006 (CN)
(72) Inventor: LI, Caiyu, Huizhou, Guangdong, 516006 (CN)
(74) Representative: Berggren Oy

(57) **Abstract**

The present disclosure provides a CCS bracket (001), a CCS assembly (003), and a battery module, and relates to the technical field of batteries. The CCS bracket (001) includes a first bracket (Oil) and a second bracket (012). The first bracket (011) is configured to install electrical components of the CCS assembly (003). The second bracket (012) is connected to the first bracket (011) and provided with a positioning structure for positioning the first bracket (Oil) relative to a battery cell (002). In the present disclosure, a strength and a rigidity of a positioning and matching part of the CCS bracket (001) relative to the battery cell (002) is increased, thereby facilitating the positioning of the CCS bracket (001) relative to the battery cell (002) and ultimately improving an installation position accuracy of the CCS assembly (003).

## Description

### TECHNICAL FIELD

The present disclosure relates to the technical field of batteries, and in particular, to a CCS bracket, a CCS assembly, and a battery module.

### BACKGROUND

In related arts, a cells contact system (CCS) assembly (i.e., a battery module collection integrated component) includes a bracket, a busbar installed on the bracket, and a collection component electrically connecting the busbar to a printed circuit board assembly (PCBA). In order to control costs, the bracket is usually a blister bracket, and a material of the blister bracket is relatively soft. Therefore, when the CCS assembly is installed on battery cells, the bracket is too flexible to position the CCS assembly relative to the battery cells, resulting in poor installation position accuracy of the CCS assembly and the problem of positional deviation.

### SUMMARY

Embodiments of the present disclosure provide a CCS bracket, CCS assembly, and a battery module, which can improve the installation position accuracy of CCS assembly.

In a first aspect, embodiments of the present disclosure provide a CCS bracket. The CCS bracket includes a first bracket and a second bracket. The first bracket is configured to install electrical components of the CCS assembly. The second bracket is connected to the first bracket, and the second bracket is provided with a positioning structure for positioning the first bracket relative to a battery cell.

In a second aspect, embodiments of the present disclosure provide a CCS assembly. The CCS assembly includes a busbar, a collection component, and the aforementioned CCS bracket. The busbar is arranged on the first bracket. The collection component is electrically connected to the busbar.

In a third aspect, the present disclosure also provides a battery module. The battery module includes a battery cell and the aforementioned CCS assembly. The battery cell is cooperated with the positioning structure, and the battery cell is electrically connected to the busbar.

### Beneficial effects of the embodiments of the present disclosure:

In the embodiments of the present disclosure, by positioning the first bracket and the battery cell through the second bracket, a strength of a positioning and matching part of the CCS bracket relative to the battery cell is increased, and a rigidity of the positioning and matching part of the CCS bracket relative to the battery cell is increased, thereby facilitating the positioning of the CCS bracket relative to the battery cell, and ultimately improving an installation position accuracy of the CCS assembly.

### BRIEF DESCRIPTION OF THE DRAWINGS

In order to more clearly illustrate technical solutions in the embodiments of the present disclosure, the drawings needed to be used in the description of the embodiments will be briefly introduced below. Obviously, the drawings in the following description are only some embodiments of the present disclosure. For those skilled in the art, other drawings may also be obtained based on these drawings without exerting creative efforts.
FIG. 1 is a schematic structural diagram of a bracket provided by embodiments of the present disclosure.
FIG. 2 is an enlarged view at area C in FIG. 1.
FIG. 3 is a schematic structural diagram of a second bracket provided by embodiments of the present disclosure.
FIG. 4 is a schematic diagram showing cooperation between the second bracket and a battery cell provided by embodiments of the present disclosure.
FIG. 5 is a cross-sectional view along a line B-B in FIG. 3.
FIG. 6 is a schematic structural diagram of the second bracket from another perspective according to embodiments of the present disclosure.
FIG. 7 is a schematic structural diagram of the bracket from another perspective according to embodiments of the present disclosure.
FIG. 8 is a schematic structural diagram of a first bracket provided by embodiments of the present disclosure.
FIG. 9 is an enlarged view at area A in FIG. 4.
FIG. 10 is a schematic structural diagram of a CCS assembly provided by embodiments of the present disclosure.
FIG. 11 is an enlarged view at area D in FIG. 10.

### Explanation of reference numbers:

001, CCS bracket; 002, battery cell; 021, pole; 022, step groove;
011, first bracket; 111, hot riveting through hole; 112, installation groove; 113, busbar positioning groove; 114, second hot riveting post; 115, connection through hole; 116, first side; 117, second side;
012, second bracket; 121, positioning hole; 122, bump; 1221, chamfer; 1222, first sidewall; 1223, first end surface; 123, first hot riveting post; 124, main through hole; 125, strip hole;
003, CCS assembly; 031, busbar; 032, collection component.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. Based on the embodiments in the present disclosure, all other embodiments obtained by those skilled in the art without making creative efforts fall within the scope of protection of the present disclosure.

In addition, it should be understood that the specific embodiments described here are only used to illustrate and explain the present disclosure, and are not used to limit the present disclosure. In the present disclosure, the terms "first" and "second" are only used for descriptive purposes and cannot be understood as indicating or implying relative importance or implicitly indicating the number of indicated technical features. Thus, features defined as "first" and "second" may explicitly or implicitly include one or more of the described features. In the description of the present disclosure, "plurality" means two or more than two, unless otherwise explicitly and specifically limited.

In the description of the present disclosure, it should be noted that, unless otherwise clearly stated and limited, the terms "install", "connect", and "link" should be understood in a broad sense. For example, it may be a fixed connection, a detachable connection, or an integral body; it may be a mechanical connection or an electrical connection; it may be a direct connection or an indirect connection through an intermediary; it may be an internal connection between two elements or an interaction between two elements. For those of ordinary skill in the art, the specific meanings of the above terms in the present disclosure may be understood based on specific circumstances.

The terms "comprise", "include", and any other variations thereof are intended to cover non-exclusive inclusion, so that a process, method, article or apparatus including a list of elements includes not only these elements but also other elements not expressly listed, or elements inherent to the process, method, article or apparatus.

In the description of the embodiments of the present disclosure, the term such as "such as" or "for example" are used to represent examples, illustrations or descriptions. Any embodiment or design described as " for example" or "such as" in the embodiments of the present disclosure is not to be construed as being more preferred or having more advantages than another embodiment or design. The use of term such as "such as" or "for example" is intended to present relative concepts in a clear manner.

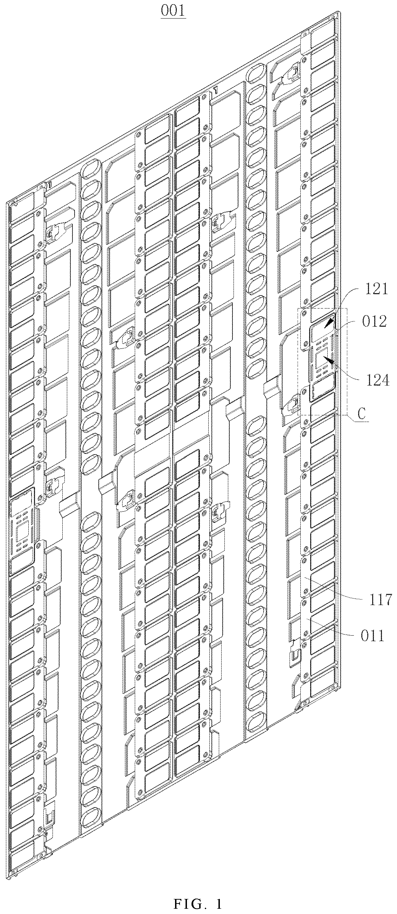

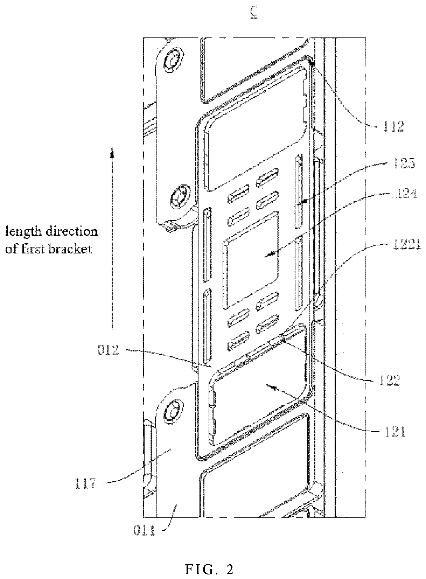

Referring to FIG. 1 and FIG. 2, FIG. 1 is a schematic structural diagram of a bracket provided by embodiments of the present disclosure, and FIG. 2 is an enlarged view at area C in FIG. 1. Embodiments of the present disclosure provide a CCS bracket 001. The CCS bracket 001 includes a first bracket 011 and a second bracket 012. The first bracket 011 is configured to install electrical components of the CCS assembly. The second bracket 012 is connected to the first bracket 011. The second bracket 012 is provided with a positioning structure for positioning the first bracket 011 relative to a battery cell.

It can be understood that the electrical components of the CCS assembly include but are not limited to a busbar, a collection component, and an output pole. A part of the busbar is electrically connected to the battery cell. The first bracket 011 and the second bracket 012 are both insulating brackets. The first bracket 011 and the second bracket 012 are configured to insulate and isolate parts of the busbar and the output pole not electrically connected to the battery cell. Specifically, the first bracket 011 is a support bracket and is configured to support the electrical components of the CCS assembly. The second bracket is a positioning bracket and configured to position the first bracket 011 relative to the battery cell.

In addition, the positioning between the second bracket 012 and the battery cell may be achieved by providing a positioning groove or positioning hole on the second bracket 012 and providing a structure matching the positioning groove or positioning hole on the battery cell. Alternatively, the positioning between the second bracket 012 and the battery cell may be achieved by providing the positioning groove or positioning hole on an outer case of the battery cell and providing the structure matching the positioning groove or positioning hole on the second bracket 012. Therefore, by providing the positioning groove or positioning hole and the matching structure, the second bracket 012 is positioned relative to the battery cell, and then the CCS bracket 001 is positioned relative to the battery cell.

A part of the battery cell cooperated with the positioning structure may be specifically arranged on a pole of the battery cell, or may also be arranged on the case of the battery cell.

For example, the second bracket 012 is glued to or hot-riveted with the first bracket 011.

In the embodiments, by positioning the first bracket 011 and the battery cell through the second bracket 012, a strength of a positioning and matching part of the CCS bracket 001 relative to the battery cell can be increased, and a rigidity of the positioning and matching part of the CCS bracket 001 relative to the battery cell can be increased, thereby facilitating the positioning of the CCS bracket 001 relative to the battery cell, and ultimately improving an installation position accuracy of the CCS assembly.

The first bracket 011 and the second bracket 012 may be made of the same material. At this time, by arranging the first bracket 011 and the second bracket 012 connected to the first bracket 011, the strength of the positioning and matching part of the CCS bracket 001 relative to the battery cell is increased, and the rigidity of the positioning and matching part is thus increased, thereby facilitating the positioning of the CCS bracket 001 relative to the battery cell, and improving the assembly efficiency.

In addition, the first bracket 011 and the second bracket 012 may also be made of different materials or through different processes. At this time, not only can the strength of the positioning and matching part of the CCS bracket 001 relative to the battery cell be increased by adding the second bracket 012 to improve the rigidity of the positioning and matching part, but also the rigidity of positioning and matching part can be further improved by designing a rigidity of the second bracket 012 greater than a rigidity of the first bracket 011. For example, the first bracket 011 is a blister bracket, a material of the first bracket 011 is PC, and a thickness of the first bracket 011 is 0.5 mm. The second bracket 012 is a plastic bracket, a material of the second bracket 012 is PC+ABS, and a thickness of the second bracket 012 ranges from 1.2 mm to 1.5 mm. 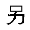

In this way, the second bracket 012 is only arranged at a position of the CCS bracket 001 where the battery cell is positioned. Therefore, on the basis of improving the installation position accuracy of the CCS assembly, material costs of CCS bracket 001 can be effectively controlled, and a space occupied by the CCS bracket can be reduced, thereby being conducive to a layout of electrical components and other components inside the battery.

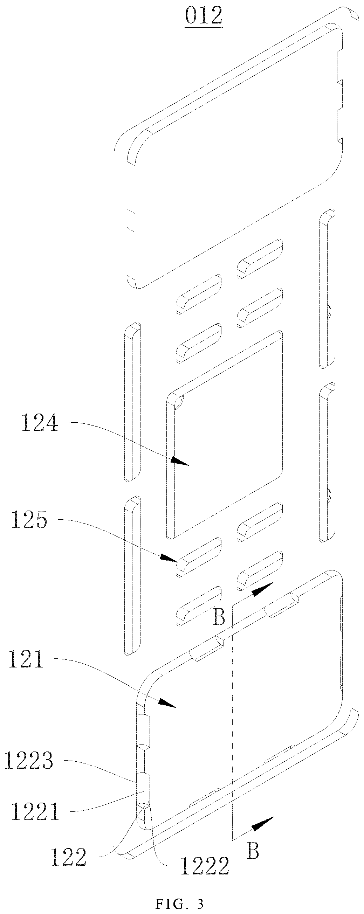

Referring to FIG. 3, FIG. 3 is a schematic structural diagram of the second bracket 012 provided by embodiments of the present disclosure. In one embodiment, the positioning structure includes a positioning hole 121 provided on the second bracket 012. The positioning hole 121 is configured to be sleeved on the battery cell.

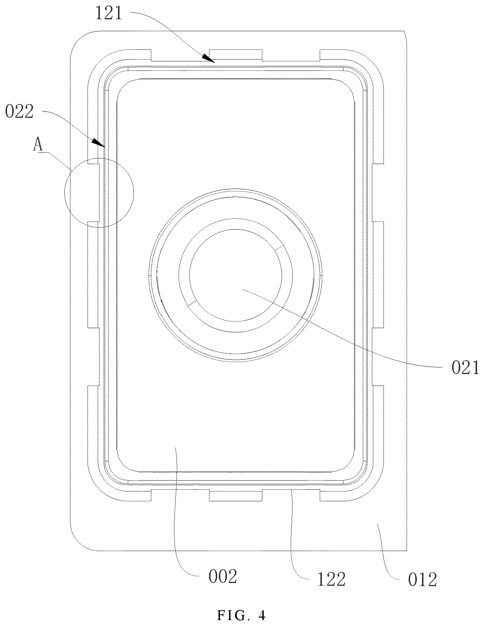

It can be understood that the positioning hole 121 is sleeved on an end of the battery cell 002 close to the pole 021. An outer peripheral surface of the battery cell has a step groove 022 at an end close to the CCS assembly, and the step groove 022 extends along a periphery of the battery cell to form an annular groove. Along an axial direction of the battery cell, the second bracket 012 is in contact with a lateral wall of the step groove 022 to achieve a blocking cooperation between the second bracket 012 and the battery cell, as illustrated in FIG. 4. FIG. 4 is a schematic diagram showing the cooperation between the second bracket 012 and the battery cell provided by embodiments of the present disclosure.

Specifically, the positioning hole 121 is configured to be sleeved on the pole of the battery cell. The step groove 022 is provided on an outer peripheral surface of the pole and is close to an end surface of the battery cell. A cross-sectional shape of the positioning hole 121 is consistent with a cross-sectional shape of the pole of the battery cell. For example, when the pole is a cylindrical pole, the cross-sectional shape of the positioning hole 121 is circular; and when the pole is a square pole, the cross-sectional shape of the positioning hole 121 is square. For example, there are two positioning holes 121, which are respectively provided at both ends of the second bracket 012.

During implementation, the cooperation between the positioning hole 121 and the battery cell can be differently limited according to use environments. For example, when the battery is used in a subzero temperature environment, at this time, an expansion rate of the battery cell is small, so the positioning hole 121 can be transitionally matched with the battery cell. When the battery is used in a temperature environment above zero, the higher the ambient temperature, the greater the expansion rate of the battery cell, and therefore, the positioning hole 121 is closely matched with the battery cell to provide a buffer space for the expansion of the battery cell, thereby relieving a stress that the CCS bracket 001 bears due to the expansion of the battery cell.

A connection through hole 115 is provided on the first bracket 011 at a position corresponding to the positioning hole 121, so that the busbar of the CCS assembly can be electrically connected to the pole 021 of the battery cell through the connection through hole 115.

Since the CCS bracket 001 is formed by blister molding, its molding cost is low. Therefore, in the embodiments, by adopting the above-mentioned positioning structure, a structure of the case of the battery cell is simple, and the simple structure is beneficial to controlling manufacturing costs of the battery.

Referring to FIG. 3 or FIG. 4, in one embodiment, a plurality of bumps are provided on a hole wall of the positioning hole 121. The plurality of bumps 122 are spaced apart along a circumferential direction of the positioning hole 121.

It can be understood that, depending on a temperature of the battery usage environment, the bumps may be in contact with the outer peripheral surface of the battery cell, or one side of the bump facing the battery cell may be in clearance fit with the outer peripheral surface of the battery cell. Specifically, the bumps may be in contact or clearance fit with the outer peripheral surface of the pole of the battery cell.

In the embodiments, the plurality of bumps are cooperated with the outer peripheral surface of the battery cell, so that the contact between an outer surface of the battery cell and the second bracket 012 is more uniform, thereby making the contact between the battery cell and the second bracket 012 more uniform, and making the contact stress between the battery cell and the second bracket 012 more uniform. The uniform contact stress is beneficial to improving an operation stability of CCS bracket 001.

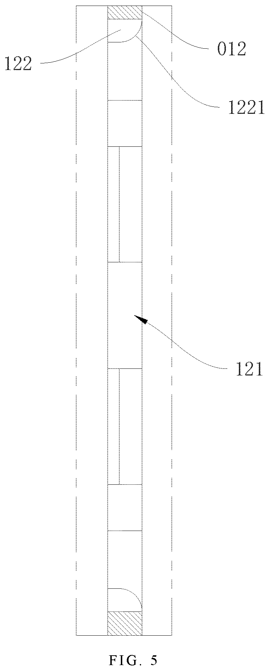

Referring to FIG. 5, FIG. 5 is a cross-sectional view along a line B-B in FIG. 3. In one embodiment, the bump 122 includes a first sidewall 1222 facing the outer peripheral surface of the battery cell and a first end surface 1223 facing a bottom of the battery cell. A chamfer 1221 is provided at a connection position of the first sidewall 1222 and the first end surface 1223.

It can be understood that a top of the battery cell is an end where the pole 021 is provided, and the bottom of the battery cell is an end of the battery cell facing away from the pole 021.

For example, the chamfer 1221 is a round chamfer.

In the embodiments, by providing the chamfer 1221 at the connection position of the first sidewall 1222 and the first end surface 1223, when the CCS bracket 001 is positioned and matched with the battery cell, the chamfer 1221 is configured to provide an installation guidance for the CCS bracket 001, thereby improving smoothness of an installation of CCS bracket 001, and ultimately improving the assembly efficiency of CCS bracket 001 and the battery cell.

In one embodiment, the first bracket 011 includes a first side 116 and a second side 117 opposite to each other. The first side 116 is configured to install the electrical components of the CCS assembly. The second side 117 is in contact with the second bracket 012.

It can be understood that the battery cell is located on one side of the second bracket 012 facing away from the first bracket 011.

Compared with a structure of the second bracket 012 located on the first side 116 of the first bracket 011, in the embodiments, through the above arrangement, a distance between a terminal of the battery cell and the first side is smaller, thereby reducing a height difference between an end of the busbar connected to the first bracket 011 and an end of the busbar electrically connected to the battery cell, and further reducing a bending size of the busbar. As a result, a resilience force of the busbar after bending can be reduced, and the reduced resilience force is beneficial to improving the stability of an electrical connection between the busbar and the battery cell.

In one embodiment, the second bracket 012 is thermally riveted to the first bracket 011.

It can be understood that one of the second bracket 012 and the first bracket 011 is provided with a first hot riveting post 123, the other one of the second bracket 012 and the first bracket 011 is provided with a hot riveting through hole 111, and the hot riveting post 123 is inserted in the hot riveting through hole 111. Te hot riveting structure is heated and melted by a hot riveting machine 111, so that the melted hot riveting structure is bonded to the other one until melted. The hot riveting structure is solidified to fix the second bracket 012 and the first bracket 011.

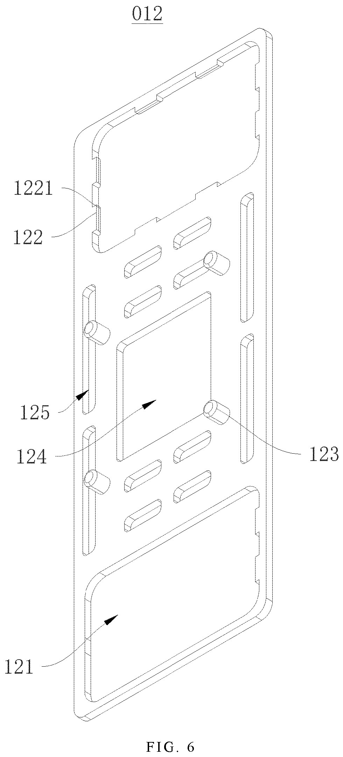

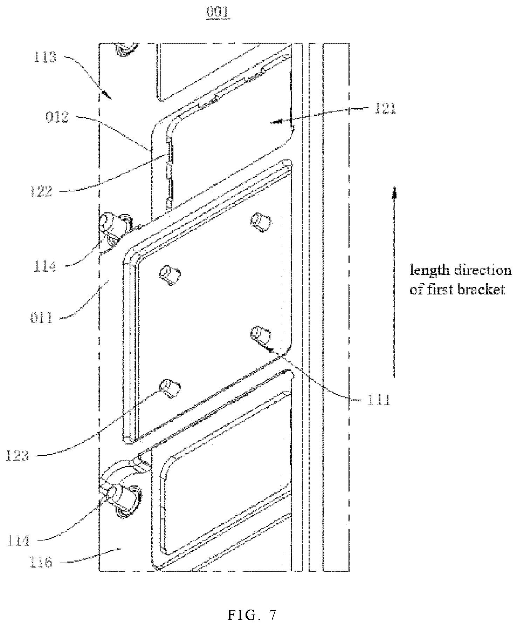

For example, the second bracket 012 is provided with the first hot riveting post 123, as illustrated in FIG. 6. FIG. 6 is a schematic structural diagram of the second bracket 012 from another perspective according to embodiments of the present disclosure. The first bracket 011 is provided with the hot riveting through hole 111. One end of the first hot riveting post 123 facing away from the second bracket 012 passes through the hot riveting through hole 111 and is hot riveted to the first bracket 011, as illustrated in FIG. 7. FIG. 7 is a schematic structural diagram of the bracket from another perspective according to embodiments of the present disclosure.

During the hot riveting connection, the end of the first hot riveting post 123 facing away from the second bracket 012 is first heated and melted by a hot riveting machine. Then the end of the first hot riveting post 123 facing away from is pressed, so that a size of the end of the first hot riveting post 123 facing away from is enlarged to fit the hot riveting through hole 111, thereby preventing the first bracket 011 and the second bracket 012 from being separated from each other.

In the embodiments, by hot riveting the second bracket 012 to the first bracket 011, a connection strength between the second bracket 012 and the first bracket 011 can be improved, thereby improving a connection stability between the second bracket 012 and the first bracket 011. In addition, the hot riveting connection is fast and easy to operate, making it suitable for mass production.

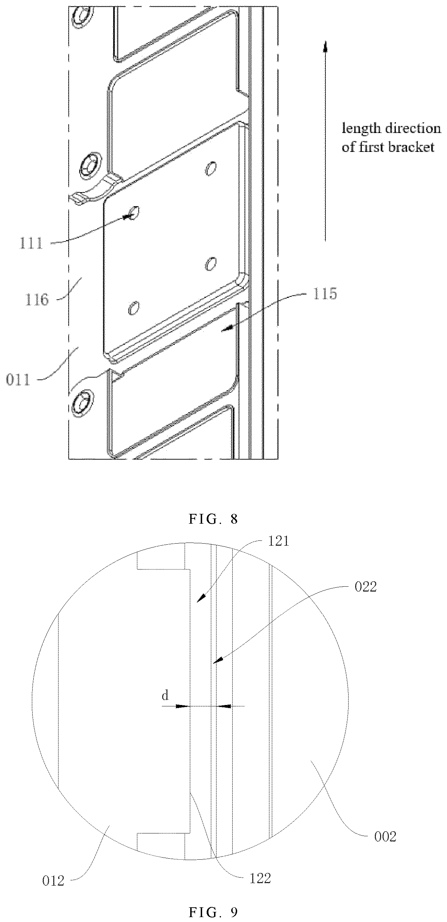

Referring to FIG. 2 and FIG. 8, FIG. 8 is a schematic structural diagram of the first bracket 011 provided by embodiments of the present disclosure. In one embodiment, the first bracket 011 is provided with an installation groove 112. The second bracket 012 is embedded in the installation groove 112.

It can be understood that since the second bracket 012 is embedded in the installation groove 112, the connection through hole 115 is provided at a bottom of the installation groove 112 and at a position corresponding to the positioning hole 121.

In the embodiments, by embedding the second bracket 012 in the installation groove 112 on the first bracket 011, a mating surface between the first bracket 011 and the second bracket 012 can be increased, thereby increasing a relative position accuracy between the first bracket 011 and the second bracket 012, and ultimately improving the position accuracy of the CCS assembly relative to the battery cell.

In one embodiment, a length of the first bracket 011 is greater than a length of the second bracket 012. The second bracket 012 is located at a middle of the first bracket 011 along a length direction.

It can be understood that the length direction of the first bracket 011 is parallel to an arrangement direction of the battery cells, and the second bracket 012 is located in the middle of the first bracket 011 along the length direction, so that the second bracket 012 corresponds to one middle battery cell of the battery cell row.

In the embodiments, through the above arrangements, on the one hand, the second bracket 012 can be only arranged at the position of the CCS bracket 001 where the battery cell is positioned, thereby effectively controlling the material costs of the CCS bracket 001; on the other hand, since a position tolerance gradually accumulates in a direction away from the second bracket 012, disposing the second bracket 012 in the middle of the first bracket 011 can make the position accuracy of both ends of the first bracket 011 consistent, so that the position tolerance accumulated at both ends of the first bracket 011 is small, thereby improving the installation position accuracy of the CCS assembly, making the CCS bracket 001 being symmetrically stressed, and being beneficial to the arrangement layout of the CCS bracket 001.

Referring to FIG. 3, in one embodiment, the second bracket 012 is provided with any one or a combination of heat dissipation holes and weight reduction holes. Specifically, the second bracket 012 is provided with a through hole group for any one or a combination of heat dissipation and weight reduction. Optionally, the through hole group includes a plurality of strip holes 125. The through hole group not only facilitates heat dissipation of the battery, but also reduces a weight of the second bracket 012.

For example, when there are two positioning holes 121, the plurality of strip holes 125 of the through hole group are divided into four groups. The second bracket 012 is provided with a main through hole 124. Along a first direction, one positioning hole 121, a first group of strip holes, the main through hole 124, a second group of strip holes, and another positioning hole 121 are arranged in sequence. Along a second direction, a third group of strip holes and a fourth group of strip holes are respectively located on both sides of the main through hole 124. The first direction and the second direction are perpendicular to each other and perpendicular to an axial direction of the battery cell. The first direction is the length direction of the first bracket 011.

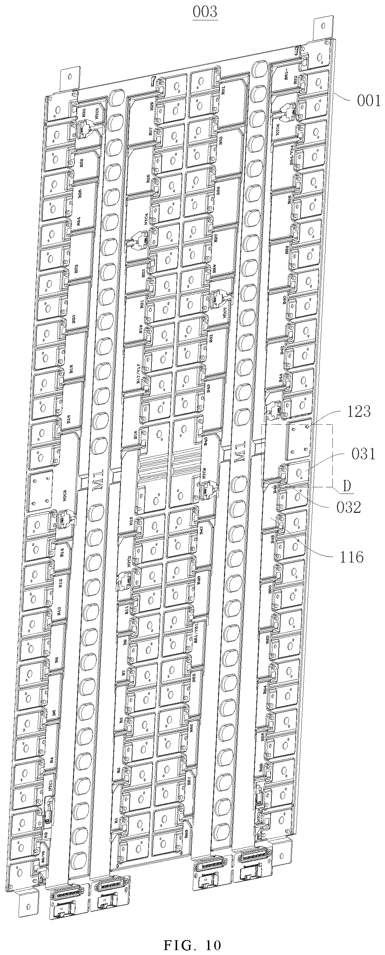

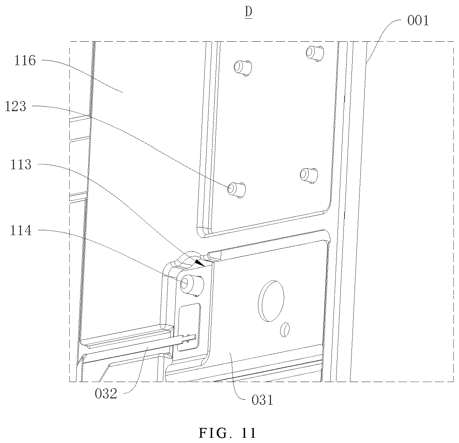

Referring to FIG. 10 and FIG. 11, FIG. 10 is a schematic structural diagram of a CCS assembly 003 provided by embodiments of the present disclosure, and FIG. 11 is an enlarged view at area D in FIG. 10. Accordingly, embodiments of the present disclosure provide a CCS assembly 003. The CCS assembly 003 includes a busbar 031, a collection component 032, and the aforementioned CCS bracket 001. The busbar 031 is arranged on the first bracket 011. The collection component 032 is electrically connected to the busbar 031.

It can be understood that one end of the collection component 032 is electrically connected to the busbar 031, and the other end is electrically connected to a PCBA, thereby transmitting a collected voltage and other signals of the battery cell to the PCBA. The collection component 032 may be disposed on the first bracket 011 to improve the stability of the collection component 032 relative to the first bracket 011.

Exemplarily, the first bracket 011 is provided with a busbar positioning groove 113, and a second hot riveting post 114 is provided in the busbar positioning groove 113. The busbar 031 is disposed in the busbar positioning groove 113, and the second hot riveting post 114 penetrates the busbar and is thermally riveted to the busbar 031, thereby fixing the busbar 031 to the first bracket 011.

In the embodiments, the CCS assembly 003 uses the above-mentioned CCS bracket 001 to increase the strength of the positioning and matching part of the CCS bracket 001 relative to the battery cell, thereby improving the rigidity of the positioning and matching part of the CCS bracket 001 relative to the battery cell, and further facilitating the positioning of the CCS bracket 001 relative to the battery cell, and improving the installation position accuracy of CCS assembly.

Correspondingly, embodiments of the present disclosure also provide a battery module. The battery module includes a battery cell and the aforementioned CCS assembly 003. The battery cell is cooperated with the positioning structure, and the battery cell is electrically connected to the busbar 031. A pole of the battery cell is cooperated with the positioning structure and extends to contact the busbar 031. Specifically, the pole of the battery cell passes through the positioning hole 121 and is electrically connected to the busbar 031 located in the busbar positioning groove 113.

A distance between the positioning structure and the outer peripheral surface of the battery cell is *d,* and the d satisfies 0 ≤ *d* ≤ 1 mm.

It can be understood that the distance between the positioning structure and the outer peripheral surface of the battery cell is specifically a distance between the bump 122 and the outer peripheral surface of the battery cell. As illustrated in FIG. 9, FIG. 9 is an enlarged view at area A in FIG. 4. The distance *d* may be but is not limited to 0, 0.2 mm, 0.3 mm, 0.5 mm, 0.7 mm, 0.8 mm, or 1 mm.

In the embodiments, by limiting the distance *d* between the positioning structure and the outer peripheral surface of the battery cell, on the one hand, an interference fit between the positioning structure and the outer peripheral surface of the battery cell can be avoided, the interference fit may cause the second bracket 012 to be damaged by an extrusion pressure from the battery cell; On the other hand, a matching gap between the positioning structure and the outer peripheral surface of the battery cell can be prevented from being too large, the large matching gap reduces the positioning accuracy of the CCS assembly 003 relative to the battery cell.

The embodiments of the present disclosure are introduced in detail above. Specific examples are used in this paper to illustrate the principles and implementation methods of the present disclosure. The description of the above embodiments is only used to help understand the methods and the core ideas of the present disclosure. At the same time, for those skilled in the art, there will be changes in the specific implementation mode and application scope based on the ideas of the present disclosure. In summary, the content of this description should not be understood as a limitation of the present disclosure.

## Claims

1. A cells contact system (CCS) bracket, **characterized in that** the CCS bracket (001) comprises:
a first bracket (011) configured to install electrical components of a CCS assembly; and
a second bracket (012) connected to the first bracket (011) and provided with a positioning structure for positioning the first bracket (011) relative to a battery cell (002).

2. The CCS bracket according to claim 1, **characterized in that** the positioning structure comprises a positioning hole (121) disposed on the second bracket (012), and the positioning hole (121) is configured to be sleeved on the battery cell (002).

3. The CCS bracket according to claim 2, **characterized in that** a plurality of bumps (122) are provided on a hole wall of the positioning hole (121), and the plurality of bumps (122) are spaced apart along a circumferential direction of the positioning hole (121).

4. The CCS bracket according to claim 3, **characterized in that** each of the bumps (122) comprises a first sidewall (1222) facing an outer peripheral surface of the battery cell (002) and a first end surface (1223) facing a bottom of the battery cell (002), and a chamfer (1221) is provided at a connection position of the first sidewall (1222) and the first end surface (1223).

5. The CCS bracket according to claim 1, **characterized in that** the first bracket (011) comprises a first side (116) and a second side (117) opposite to each other, the first side (116) is configured to install the electrical components of the CCS assembly, and the second side (117) is in contact with the second bracket (012).

6. The CCS bracket according to any one of claim 1 to claim 5, **characterized in that** one of the second bracket (012) and the first bracket (011) is provided with a hot riveting post (123), the other one of the second bracket (012) and the first bracket (011) is provided with a hot riveting through hole (111), and the hot riveting post (123) is inserted in the hot riveting through hole (111).

7. The CCS bracket according to any one of claim 1 to claim 5, **characterized in that** the first bracket (011) is provided with an installation groove (112), and the second bracket (012) is embedded in the installation groove (112).

8. The CCS bracket according to any one of claim 1 to claim 5, **characterized in that** a rigidity of the first bracket (011) is less than a rigidity of the second bracket (012).

9. The CCS bracket according to claim 8, **characterized in that** the first bracket (011) is a blister bracket, the second bracket (012) is a plastic bracket, and a thickness of the plastic bracket is greater than a thickness of the blister bracket.

10. The CCS bracket according to any one of claim 1 to claim 5, **characterized in that** the first bracket (011) is a support bracket, and the second bracket (012) is a positioning bracket.

11. The CCS bracket according to any one of claim 1 to claim 5, **characterized in that** a length of the first bracket (011) is greater than a length of the second bracket (012), and the second bracket (012) is located at a middle of the first bracket (011) along a length direction.

12. The CCS bracket according to any one of claim 1 to claim 5, **characterized in that** the second bracket (012) is provided with a through hole group for any one or a combination of heat dissipation and weight reduction.

13. A cells contact system (CCS) assembly, **characterized by** comprising:
the CCS bracket (001) of any one of claim 1 to claim 12;
a busbar (031) arranged on the first bracket (011); and
a collection component (032) electrically connected to the busbar (031).

14. A battery module, **characterized by** comprising:
the CCS assembly (003) of claim 13; and
a battery cell (002) cooperated with the positioning structure and electrically connected to the busbar (031).

15. The battery module according to claim 14, **characterized in that** a pole (021) of the battery cell (002) is cooperated with the positioning structure and extends to contact the busbar (031), a distance between the positioning structure and an outer peripheral surface of the pole (021) is defined as d, and the d satisfies 0 ≤ d≤ 1 mm.
